# EUROPÄISCHE PATENTANMELDUNG

(11) **EP 0 860 802 A2**
(43) Veröffentlichungstag der Anmeldung: **26.08.1998**
(21) Anmeldenummer: 98102913.5
(22) Anmeldetag: 19.02.1998
(51) Int. Cl.: G08B 21/00

(54) **Sicherheitseinrichtung für Erdgasanlagen bei Endverbrauchern**

(30) Priorität: 25.02.1997 DE 29703361 U
(71) Anmelder: Bürkert Werke GmbH & Co., D-74653 Ingelfingen (DE)
(72) Erfinder: Müller, Peter, 74653 Künzelsau-Gaisbach (DE)
(74) Vertreter: Degwert, Hartmut, Dipl.-Phys.

(57) **Zusammenfassung**

Zum Schutze gegen unkontrolliertes Austreten von Erdgas in Gebäuden wird eine Sicherheitseinrichtung vorgeschlagen. Sie umfaßt eine Absperr-Armatur (22) in einer Stichleitung (12) vor oder hinter einer Wanddurchführung des Gebäudes (10). Von der Absperr-Armatur (22) führt eine Verteilerleitung (20) zu einem Endverbraucher. An wenigstens einer Stelle im Gebäude ist ein Gassensor (40) angeordnet, der an eine zentrale Auswerteeinheit (11) angeschlossen ist. Die Absperr-Armatur (22) wird durch ein von der Auswerteeinheit (11) ansprechend auf die Detektion von Gas durch den Gassensor (40) abgegebenes Ansteuersignal in ihre Absperrstellung überführt.

## Beschreibung

Die Erfindung betrifft eine Sicherheitseinrichtung für Erdgasanlagen bei Endverbrauchern, mit einer Absperr-Armatur in einer Stichleitung vor oder hinter einer Wanddurchführung eines Gebäudes und wenigstens einer von der Absperr-Armatur zu einem Endverbraucher führenden Verteilerleitung.

Erdgas wird über Versorgungsleitungen und Stichleitungen zum Endverbraucher in Wohn- oder Industriegebäuden geführt. An jedem zu versorgenden Gebäude befindet sich in der Regel hinter einer Wanddurchführung eine Absperr-Armatur, in Form eines Kugelhahns, der manuell betätigt wird. Auf den Kugelhahn folgt gewöhnlich ein Druckregler. Von dem Druckregler führen die verschiedenen Verteilerleitungen zu den Endverbrauchern, bei denen es sich um unterschiedliche Endgeräte handeln kann, wie beispielsweise Gasbrenner für Zentralheizungen, Gasherde oder Thermen zur Aufbereitung von Warmwasser.

Bei einem Defekt in der Erdgasanlage kann Erdgas austreten. Das Erdgas tritt unbemerkt aus, und schon kleinste Zündfunken oder erhitzte Gegenstände können zu Explosionen von hoher Zerstörungkraft führen. Bei Erdgasanlagen für Endverbraucher sind derzeit keine Sicherheitseinrichtungen bekannt, mit denen die von unbemerkt austretendem Erdgas ausgehenden Gefahren beseitigt werden könnten.

Der Erfindung liegt die Aufgabe zugrunde, eine Sicherheitseinrichtung für Erdgas oder andere brennbare Gase in Anlagen für Endverbraucher zur Verfügung zu stellen, durch die eine Gefährdung durch unbemerkt austretendes Gas vermieden oder doch erheblich vermindert wird.

Diese Aufgabe wird durch eine Sicherheitseinrichtung der eingangs angegebenen Art gelöst, die dadurch gekennzeichnet ist, daß an wenigstens einer Stelle im Gebäude ein Gassensor angeordnet ist, daß der Gassensor an eine zentrale Auswerteeinheit angeschlossen ist und daß die Absperr-Armatur durch ein von der Auswerteeinheit ansprechend auf die Detektion von Gas durch den Gassensor abgegebenes Ansteuersignal in ihre Absperrstellung überführbar ist. Sobald der Gassensor geringste Mengen von unbemerkt ausgetretenem Gas detektiert, spricht die Auswerteeinheit an und verursacht die Überführung der Absperr-Armatur in ihre Absperrstellung. Die Gaszufuhr zu dem Gebäude wird dann sofort unterbrochen. Es kann kein Gas mehr in das Gebäude nachströmen, wodurch die Explosionsgefahr erheblich reduziert wird.

Bei der bevorzugten Ausführungsform nimmt die AbsperrArmatur ihre Absperrstellung im Ruhezustand ein. Bei Verwendung eines Kugelhahns oder Schiebers kann dies durch eine vorgespannte Feder erreicht werden, die das Absperrorgan in die Schließstellung beaufschlagt. Die Absperr-Armatur ist dann in ihrer Absperrstellung stromlos, so daß jede Funkenbildung vermieden wird.

Grundsätzlich kann die Sicherheitseinrichtung in zwei verschiedenen Ausführungen realisiert werden. Bei der ersten Ausführungsform ist jedem Endverbraucher in dem Gebäude wenigstens ein Gassensor zugeordnet. Alle Gassensoren sind an dieselbe zentrale Auswerteeinheit angeschlossen. Die zentrale Auswerteeinheit führt eine ODER-Verknüpfung der von den verschiedenen Gassensoren gelieferten Signale durch.

Gemäß einer zweiten Ausführungsform ist der Auswerteeinheit ein zentraler Gassensor zugeordnet. Von jedem Endverbraucher ist eine Rohrleitung an den zentralen Gassensor herangeführt. Über die Rohrleitungen wird das Gas "geschnüffelt", d.h. es wird am Gassensor ein Unterdruck erzeugt, durch den Gas von der jeweiligen Verbraucherstelle durch die Rohrleitung zum Gassensor gesaugt wird. Der zentrale Gassensor wird vorzugsweise durch einen von der Auswerteeinheit zyklisch gesteuerten Magnetventilblock nacheinander an jede einzelne Rohrleitung angeschlossen.

Beiden Ausführungen ist vorzugsweise eine modulare Auslegung gemeinsam. Durch den modularen Aufbau der Einrichtung wird eine große Flexibilität mit erleichterter Erweiterbarkeit erzielt.

Eine zweckmäßige Weiterbildung der Erfindung besteht darin, daß die Auswerteeinheit zugleich mit der Abgabe des Ansteuersignals für die Absperr-Armatur eine Warneinrichtung ansteuert, beispielsweise eine akustische und/oder optische Warneinrichtung.

Weitere Merkmale und Vorteile der Erfindung ergeben sich aus der folgenden Beschreibung und aus der Zeichnung, auf die Bezug genommen wird. In der Zeichnung zeigen:
Fig. 1 sehr schematisch eine erste Ausführungsform der Sicherheitsrichtung; und
Fig. 2 eine analoge Darstellung einer zweiten Ausführungsform der Sicherheitseinrichtung.

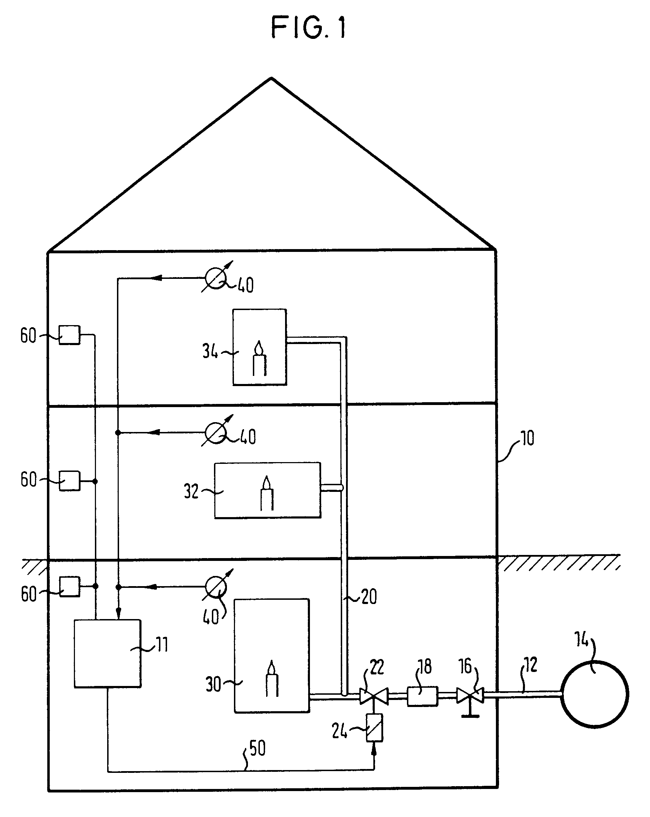

Fig. 1 zeigt schematisch ein Gebäude 10 mit einem Keller und zwei Stockwerken. Das Gebäude 10 ist über eine Stichleitung 12 mit einer Erdgas-Versorgungsleitung 14 verbunden. Auf eine Wanddurchführung im Keller des Gebäudes 10 folgt ein manuell zu betätigender Kugelhahn 16. Hinter dem Kugelhahn 16 befindet sich ein Druckregler 18. Zwischen dem Druckregler 18 und den zu den einzelnen Verbrauchsstellen führenden Verteilerleitungen 20 befindet sich eine Absperr-Armatur 22, deren Absperrorgan durch einen Stellantrieb 24 betätigbar ist.

Bei der beispielhaften Darstellung in Fig. 1 sind an die Verteilerleitungen 20 eine Zentralheizung 30 im Keller des Gebäudes, ein Gasherd 32 im Erdgeschoß und eine Therme 34 zur Aufbereitung von Warmwasser im ersten Stock des Gebäudes 10 angeschlossen.

Jeder Brennstelle im Gebäude ist ein Gassensor 40 zugeordnet. Die Technik von Gassensoren ist bekannt. Ein geeigneter Gassensor erlaubt es, Odorierungsmittel (z.B. THT) in Erdgas oder Erdgas selbst nachzuweisen. Geeignete Gassensoren arbeiten nach dem physikalischen Prinzip der akustischen Oberflächenwellensensoren. Das Wirkungsprinzip ist allgemein bekannt. Der Oberflächenwellensensor trägt eine Beschichtung, an dem die nachzuweisende Substanz anhaftet und durch ihre Anwesenheit die Resonanzfrequenz des Oberflächenwellensensors dämpft. Durch Vergleichen der mittels des Oberflächenwellensensors erzeugten Frequenz mit einer Referenzfrequenz können geringste Gasmengen anhand der Differenzfrequenz nachgewiesen werden.

Alle Gassensoren 40 sind an eine zentrale Auswerteeinheit 11 angeschlossen. Diese führt eine ODER-Verknüpfung der von den verschiedenen Gassensoren gelieferten Signale durch. Die Auswerteeinheit 11 ist ausgangsseitig über eine Ansteuerleitung 50 mit dem Stellantrieb 24 der Absperr-Armatur 22 verbunden. Sobald die Auswerteeinheit 11 anhand der von den verschiedenen Gassensoren 40 gelieferten Signale die Anwesenheit von Erdgas an einem der Gassensoren festgestellt hat, gibt sie über die Leitung 50 ein Ansteuersignal aus, durch das die Absperr-Armatur 22 über den Stellantrieb 24 in ihre Absperrstellung überführt wird. Es kann dann kein weiteres Gas in das Gebäude nachströmen.

Bei der Absperr-Armatur handelt es sich vorzugsweise um eine Ausführung, die im Ruhezustand ihre Absperrstellung einnimmt. Dies kann beispielsweise durch einen Kugelhahn oder Schieber erreicht werden, der durch eine vorgespannte Feder in seine Schließstellung beaufschlagt wird.

In die Auswerteeinheit 11 sind vorzugsweise weitere Funktionen integriert, insbesondere zur Überwachung und Selbstdiagnose des Gesamtsystems. Die Auswerteeinheit 11 übernimmt auch Anzeigefunktionen oder die Aufforderung nach einer Inspektion, wenn laufende Betriebsdaten von vorher definierten Standards abweichen.

Über einen weiteren Ausgang der Auswerteeinheit 11 werden vorzugsweise Warneinrichtungen angesteuert, wie die Warneinrichtungen 60 in Fig. 1, von denen je eine in einem Stockwerk des Gebäudes 10 angeordnet ist. Auch eine Meldung unmittelbar an den Gasversorger kann vorgesehen sein.

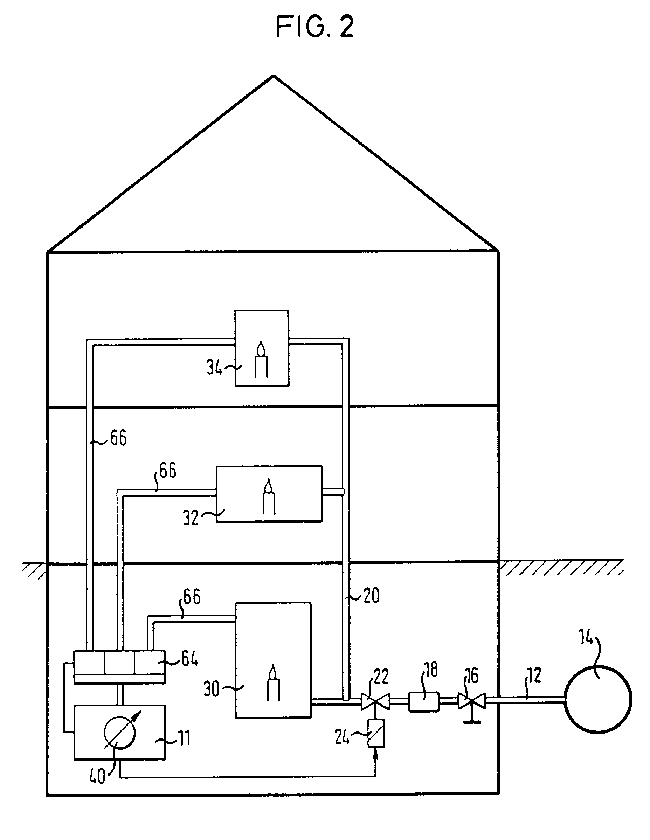

Bei der Ausführungsform nach Fig. 2 ist der Auswerteeinheit 11 ein zentraler Gassensor 40 zugeordnet. Dieser zentrale Gassensor 40 wird über einen Magnetventilblock 64, der von der Auswerteeinheit 11 angesteuert wird, zyklisch nacheinander mit einer von mehreren Rohrleitungen verbunden, die zu einer Brennstelle im Gebäude führen. Über diese Rohrleitungen 66 wird Gas "geschnüffelt", d.h. von der Brennstelle an den Gassensor 40 herangeführt. Die sonstige Ausbildung der Sicherheitseinrichtung stimmt mit Fig. 1 überein und wird daher nicht erneut beschrieben.

## Patentansprüche

1. Sicherheitseinrichtung für Erdgasanlagen bei Endverbrauchern, mit einer Absperr-Armatur (22) in einer Stichleitung (12) vor oder hinter einer Wanddurchführung eines Gebäudes (10) und wenigstens einer von der Absperr-Armatur (22) zu einem Endverbraucher führenden Verteilerleitung (20), dadurch gekennzeichnet, daß an wenigstens einer Stelle im Gebäude ein Gassensor (40) angeordnet ist, daß der Gassensor (40) an eine zentrale Auswerteeinheit (11) angeschlossen ist und daß die Absperr-Armatur (22) durch ein von der Auswerteeinheit (11) ansprechend auf die Detektion von Gas durch den Gassensor (40) abgegebenes Ansteuersignal in ihre Absperrstellung überführbar ist.

2. Sicherheitseinrichtung nach Anspruch 1, dadurch gekennzeichnet, daß die Absperr-Armatur (22) die Absperrstellung im Ruhezustand einnimmt.

3. Sicherheitseinrichtung nach Anspruch 1 oder 2, dadurch gekennzeichnet, daß jedem Endverbraucher (30, 32, 34) in dem Gebäude wenigstens ein Gassensor (40) zugeordnet ist und alle Gassensoren an dieselbe zentrale Auswerteeinheit (11) angeschlossen sind.

4. Sicherheitseinrichtung nach Anspruch 3, dadurch gekennzeichnet, daß die Auswerteeinheit (11) für den Anschluß mehrerer Gassensor-Module eingerichtet und die Sicherheitseinrichtung so zur Hinzunahme weiterer Gassensor-Module erweiterbar ist.

5. Sicherheitseinrichtung nach Anspruch 1 oder 2, dadurch gekennzeichnet, daß der Auswerteeinheit (11) ein zentraler Gassensor (40) zugeordnet ist und von mehreren Endverbrauchern Rohrleitungen (66) an den Gassensor (40) herangeführt sind.

6. Sicherheitseinrichtung nach Anspruch 5, dadurch gekennzeichnet, daß der zentrale Gassensor (40) durch einen von der Auswerteeinheit (11) zyklisch gesteuerten Magnetventilblock (64) nacheinander an jede einzelne Rohrleitung (66) angeschlossen wird.

7. Sicherheitseinrichtung nach einem der vorstehenden Ansprüche, gekennzeichnet durch eine Warneinrichtung (60), die durch die Auswerteeinheit (11) zugleich mit der Abgabe des Ansteuersignals aktivierbar ist.
